# EUROPÄISCHE PATENTSCHRIFT

(11) **EP 0 614 842 B1**
(45) Veröffentlichungstag und Bekanntmachung des Hinweises auf die Patenterteilung: **26.03.1997**
(21) Anmeldenummer: 93120102.4
(22) Anmeldetag: 14.12.1993
(51) Int. Cl.: B65H 75/20

(54) **Spule für Drähte oder Schnüre**
Wire or cable reel
Bobine pour fils ou câbles

(30) Priorität: 27.02.1993 DE 9302874 U
(43) Veröffentlichungstag der Anmeldung: 14.09.1994
(73) Patentinhaber: DRAHTWARENFABRIK DRAHTZUG STEIN GmbH & Co. KG, D-67317 Drahtzug-Altleiningen (DE)
(72) Erfinder: Di Gioia, Zefferino, D-67278 Bockenheim (DE); Schmitt, Hans, D-67317 Alteiningen-Höningen (DE)
(74) Vertreter: Fischer, Wolf-Dieter, Dipl.-Ing.

(56) Entgegenhaltungen:
- FR-A- 2 299 258
- PATENT ABSTRACTS OF JAPAN vol. 7, no. 157 (M-227)(1302) 9. Juli 1983 & JP-A-58 065 577 (KOBE SEIKOSHO K.K.) 19. April 1983
- PATENT ABSTRACTS OF JAPAN vol. 10, no. 18 (M-448)(2075) 24. Januar 1986 & JP-A-60 178 167 (KOBE SEIKOSHO K.K.) 12. September 1985

## Beschreibung

Die Erfindung betrifft eine Spule für Drähte oder Schnüre aus Metall, Kunststoff oder dergleichen, insbesondere für Schweißdrähte, bestehend aus einstückigen Segmenten, die jeweils einen sich in radialen Ebenen nach innen erstrekkenden U-förmigen Drahtbügel mit durch einen Quersteg verbundenen parallelen Schenkeln bilden, dessen freie Schenkelenden in Umfangsrichtung verlaufende Fortsätze aufweisen, die aneinandergesetzt zwei parallele Drahtringe bilden und die für das Zusammenfügen der Segmente jeweils am nachfolgenden Segment befestigt sind.

Eine solche Spule ist bekannt (DE 25 03 567 C2), wobei diese Spule durch Zusammenfügen der Segmente sehr einfach und kostengünstig mit einer geringen Anzahl von Schweißungen hergestellt werden kann. Bei dieser Spule bilden die Querstege zwischen den Schenkeln der U-förmigen Drahtbügel die Auflage für die aufzuwickelnden Drähte, d.h. es wird damit der Wickelkern gebildet. Bei bestimmten Größenabmessungen dieser Spulen, insbesondere wenn das Durchmesserverhältnis zwischen Wickelkern und zentrischem Spulennabendurchmesser eine bestimmte Größenordnung erreicht, werden Adapter verwendet, die es ermöglichen, die Spule auf eine entsprechende Laufachse aufzustecken.

Bekannt ist weiterhin eine Spule (DE 28 14 057 A1, JP-A-58 065 577 oder JP-A-60 178 167) die aus einzelnen einstückigen Segmenten zusammengesetzt ist, wobei von diesen Segmenten sowohl der Wickelkerndurchmesser als auch ein zentraler Spulennabendurchmesser gebildet werden. Der Nachteil dieser bekannten Spule besteht jedoch darin, daß die die Spule bildenden Segmente zum Verbinden zweier solcher Segmente vier Schweißstellen erfordern, wobei das Setzen der Schweißpunkte durch ihre örtliche Lage erschwert ist und damit eine aufwendigere Schweißeinrichtung erfordert. Darüber hinaus ergibt die Ausgestaltung der Segmente einen erhöhten Materalverbrauch.

Der Erfindung liegt die Aufgabe zugrunde, eine Spule der eingangs genannten Art dahingehend zu verbessern, daß ohne zusätzliche Schweißverbindungen und unter Anwendung des gleichen Herstellungsverfahrens eine Spule erzeugt wird, die sowohl einen Wickel- als auch einen zentrischen Spulennabendurchmesser aufweist.

Diese Aufgabe wird nach der Erfindung dadurch gelöst, daß die radialen Schenkel in etwa bis zum Spulennabendurchmesser verlaufen und dort in Richtung der Fortsätze nach innen oder außen umgebogen und radial in kurzen Ansätzen zuruckgeführt sind wobei die Außenseite der Biegung den Spulennabendurchmesser ergibt, während der Spulenwickeldurchmesser durch die am Ende der Ansätze zwischen den Schenkeln vorhandenen Querstege gebildet ist.

Eine vorteilhafte Ausführungsform besteht darin, daß die Schenkel der kurzen Ansätze zu den langen Schenkeln einen Winkel von etwa 90° bis etwa -15° einschließen.

Weiterhin ist es vorteilhaft, daß für das Zusammenfügen der Segmente die Fortsätze am Übergangsende zum zugeordneten U-Schenkel eine Vertiefung aufweisen, an denen die Enden der Fortsätze des nachfolgenden Segments befestigt sind.

Es ist vorteilhaft, daß die Enden der Fortsätze radial nach innen abgebogen sind, daß sie parallel zu den Schenkeln des jeweils nachfolgenden Segments verlaufen und daß diese Enden mit diesen Schenkeln fest verbunden sind, z.B. durch Schweißstellen.

Weiterhin ist es vorteilhaft, daß die Fortsätze sich nach entgegengesetzten Richtungen erstrecken.

Die Erfindung bringt den Vorteil, daß sich durch eine einfache Abwandlung der bekannten Spule eine solche Spule erzeugen läßt, die eine zentrische Spulennabe aufweist. Hierbei sind für diese zusätzliche Spulennabe keine zusätzlichen Schweißungen erforderlich und die Spule kann an den Maschinen hergestellt werden, die auch für die Herstellung der gattungsgemäßen Spule zum Einsatz kommt.

Die Erfindung wird in der nachfolgenden Beschreibung anhand von in den Zeichnungen dargestellten Ausführungsbeispielen näher erläutert.

Es zeigen,
- Fig. 1: eine Ausführungsform der erfindungsgemäßen Spule im Aufriß,
- Fig. 2: eine Seitenansicht von Fig. 1,
- Fig. 3: eine Ansicht im Aufriß eines erfindungsgemäßen Segments,
- Fig. 4: einen Grundriß von Fig. 3,
- Fig. 5: eine weitere Ausführungsform eines solchen Segments in schaubildlicher Ansicht und
- Fig. 6: eine dritte Ausführungsform für die Ausgestaltung des Segments in schaubildlicher Ansicht.

Ein Segment 1 kann in einem Arbeitsgang so ausgebildet werden, daß bogenförmige parallele Fortsätze 2 eines U-förmigen Drahtbügels über jeweils eine nach innen gedrückte Vertiefung 5 in die beiden U-Schenkel übergehen. Die radialen Schenkel 4 verlaufen in etwa bis zu einem Spulennabendurchmesser 6 und sind dort in Richtung der Fortsätze 2 nach innen oder außen umgebogen. Die Außenseite 8 dieser Biegung 9 wird von dem Kreis berührt, der den Spulennabendurchmesser 6 bildet. Die Schenkel 4 werden dann in kurzen Ansätzen 12 im Anschluß an die Biegung 9 zurückgeführt und sind mit Hilfe von Querstegen 3 verbunden. Diese Querstege 3 bilden den Spulenwickeldurchmesser 7.

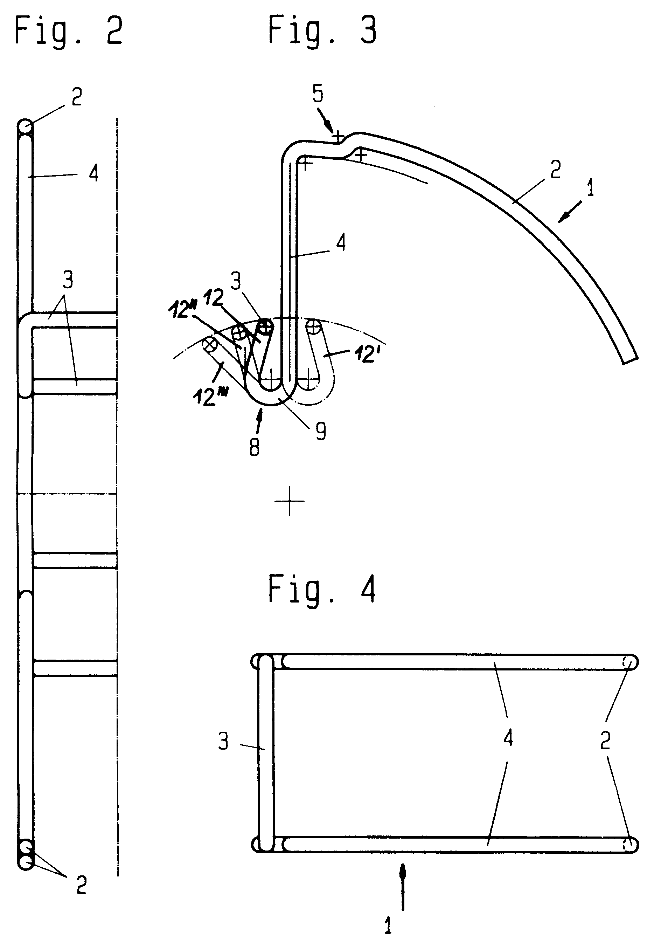

In Fig. 3 sind verschiedene Möglichkeiten für die Ausbildung der kurzen Ansätze dargestellt, wobei mit dem Bezugszeichen 12 die nach außen und um etwa 200° gebogene Variante dargestellt ist. Demgemäß ergeben sich nach innen gerichtete Ansätze 12'. Weitere Möglichkeiten sind gemäß den Ausgestaltungen der kurzen Ansätze 12'' bzw. 12''' gezeichnet, wobei insgesamt ein Winkelbereich zwischen den radialen Schenkeln 4 und der Position der kurzen Ansätze von etwa 90° bis etwa -15° möglich ist. Diese kurzen Ansätze 12, 12',12'', 12''' brauchen nicht geradlinig verlaufen, sie können auch kreisförmig, oval oder mehreckig gebogen sein. Günstig ist eine Anordnung der Querstege 3 möglichst dicht an den Schenkeln 4 entsprechend den Ansätzen 12,12', um einen einwandfreien Ablauf des Schweißdrahtes zu gewährleisten.

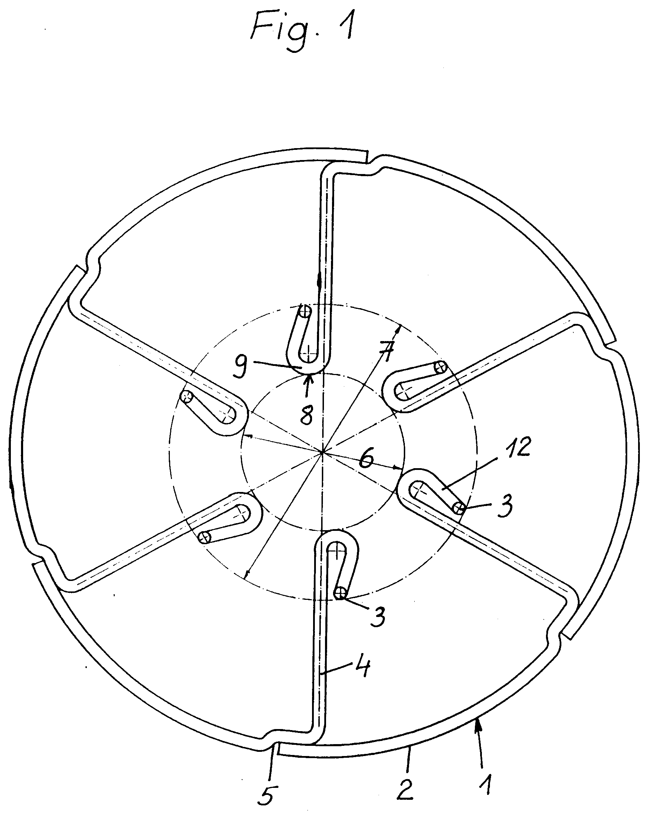

Wenn man bei jeweils entsprechender Länge der bogenförmigen und parallelen Fortsätze 2 zwei oder mehrere solcher Segmente 1 zusammenfügt, so erhält man eine Spule, wie sie in den Figuren 1 und 2 dargestellt ist. Diese enthält durch die Aneinanderreihung der Fortsätze 2 zwei parallele Drahtringe und im gleichen Abstand von der Mittelachse nach innen reichende Drahtbügel.

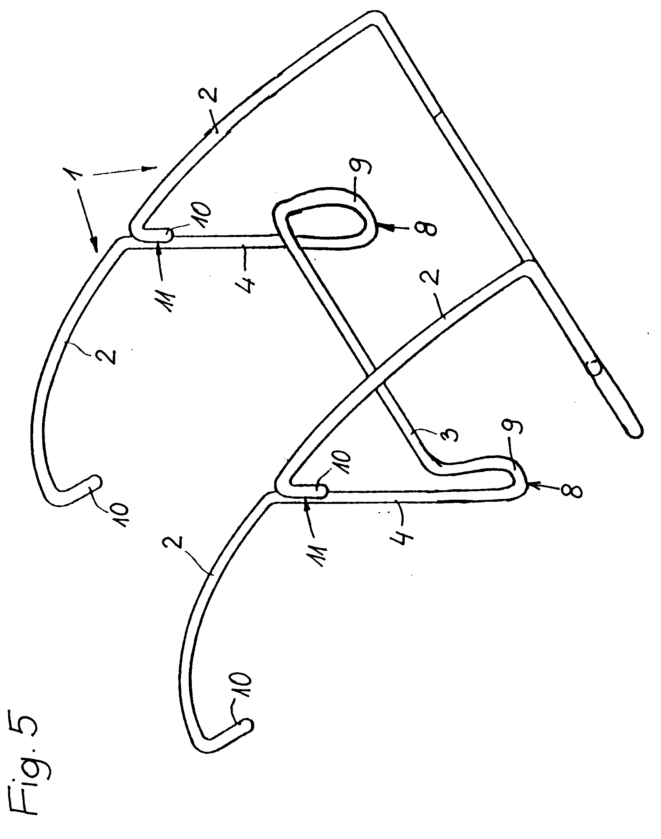

Bei der weiteren Ausführungsform nach Fig. 5 sind die Enden 10 der Fortsätze 2 radial nach innen abgebogen und verlaufen parallel zu den Schenkeln 4 des jeweils nachfolgenden Segments. Die Verbindung erfolgt dann zwischen diesen Enden 10 und den Schenkeln 4 an Schweißstellen 11.

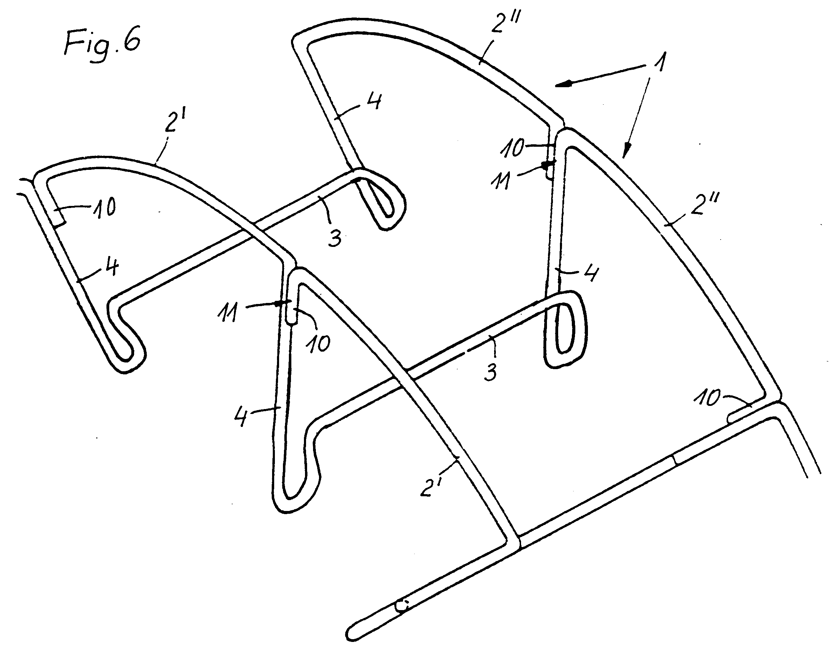

Schließlich zeigt die Ausführungsform nach Fig. 6 Segmente 1, bei denen die Fortsätze 2', 2'' sich nach entgegengesetzten Richtungen erstrecken. Die Verbindung der einzelnen Segmente 1 erfolgt gemäß der Ausführungsform nach Fig. 5.

## Patentansprüche

1. Spule für Drähte oder Schnüre aus Metall, Kunststoff oder dergleichen,insbesondere für Schweißdrähte, bestehend aus einstückigen Segmenten (1), die jeweils einen sich in radialen Ebenen nach innen erstreckenden U-förmigen Drahtbügel mit durch einen Quersteg (3) verbundenen parallelen Schenkeln (4) bilden, dessen freie Schenkelenden in Umfangsrichtung verlaufende Fortsätze (2) aufweisen, die aneinandergesetzt zwei parallele Drahtringe bilden und die für das Zusammenfügen der Segmente (1) jeweils am nachfolgenden Segment (1) befestigt sind, dadurch gekennzeichnet, daß die radialen Schenkel (4) in etwa bis zum Spulennabendurchmesser (6) verlaufen und dort in Richtung der Fortsätze (2) nach innen oder außen umgebogen und radial in kurzen Ansätzen (12) zurückgeführt sind, wobei die Außenseite (8) der Biegung (9) den Spulennabendurchmesser (6) ergibt, während der Spulenwickeldurchmesser (7) durch die am Ende der Ansätze (12) zwischen den Schenkeln (4) vorhandenen Querstege (3) gebildet ist.

2. Spule nach Anspruch 1, dadurch gekennzeichnet, daß die Schenkel der kurzen Ansätze (12, 12', 12'', 12''') zu den langen Schenkeln (4) einen Winkel von etwa 90° bis etwa -15° einschließen.

3. Spule nach Anspruch 1 und 2, dadurch gekennzeichnet, daß für das Zusammenfügen der Segmente (1) die Fortsätze (2) am Übergangsende zum zugeordneten U-Schenkel (4) eine Vertiefung (5) aufweisen, an denen die Enden der Fortsätze (2) des nachfolgenden Segments (1) befestigt sind.

4. Spule nach Anspruch 1 und 2, dadurch gekennzeichnet, daß die Enden (10) der Fortsätze (2) radial nach innen abgebogen sind, daß sie parallel zu den Schenkeln (4) des jeweils nachfolgenden Segements verlaufen und daß diese Enden (10) mit diesen Schenkeln (4) fest verbunden sind, z.B. durch Schweißstellen (11).

5. Spule nach Anspruch 1 bis 4, dadurch gekennzeichnet, daß die Fortsätze (2', 2'') sich nach entgegengesetzten Richtungen erstrecken.

## Claims

1. A reel for wire or cable of metal, plastics material or the like, in particular for welding wire, comprising one-piece segments (1) each forming a U-shaped wire piece which extends inwards in radial planes and has parallel limbs (4) connected by a transverse bar (3), the free ends of which limbs (4) have extensions (2) running in the peripheral direction, which extensions (2) form two parallel wire rings when placed together, and are in each case secured to the following segment (1) for the purpose of joining the segments (1) together, characterized in that the radial limbs (4) run approximately up to the diameter (6) of the hub of the reel, and are there bent inwards or outwards in the direction of the extensions (2) and guided back radially in the form of short projections (12), the outside (8) of the curve (9) forming the diameter (6) of the hub of the reel, whilst the diameter (7) of winding on the reel is formed by the transverse bars (3) located on the end of the projections (12) between the limbs (4).

2. A reel according to Claim 1, characterized in that the limbs of the short projections (12, 12', 12'', 12''') encompass an angle of approximately 90° to approximately -15° to the long limbs (4).

3. A reel according to Claims 1 and 2, characterized in that, for joining the segments (1) together, the extensions (2) have at the end of the transition into the associated limb (4) of the U a depression (5) at which the ends of the extensions (2) of the following segment (1) are secured.

4. A reel according to Claims 1 and 2, characterized in that the ends (10) of the extensions (2) are bent off radially inwards, in that they run parallel to the limbs (4) of the following segment in each case, and in that these ends (10) are connected securely to these limbs (4), for example by welded points (11).

5. A reel according to Claims 1 to 4, characterized in that the extensions (2', 2'') extend in opposite directions.

## Revendications

1. Bobine pour fils ou cordons en métal, plastique ou matières semblables, en particulier pour fil à souder, constituée de segments d'une seule pièce (1) qui forment chacun un étrier en fil en forme de U s'étendant vers l'intérieur dans des plans radiaux, ayant des branches parallèles (4) réunies par une traverse (3) et dont les extrémités libres des branches présentent des appendices s'étendant dans la direction circonférentielle (2) qui forment, placés bout à bout, deux anneaux en fil parallèles et sont, pour l'assemblage des segments (1), fixés chacun au segment (1) suivant, caractérisée par le fait que les branches radiales (4) s'étendent à peu près jusqu'au diamètre (6) du moyeu de la bobine et sont, à cet endroit, recourbées vers l'intérieur ou l'extérieur en direction des appendices (2) et ramenées radialement en bouts courts (12), le côté extérieur (8) de la courbe (9) donnant le diamètre (6) du moyeu de la bobine, tandis que le diamètre (7) de l'enroulement de la bobine est formé par les traverses (3) existant entre les branches (4) à l'extrémité des bouts (12).

2. Bobine selon la revendication 1, caractérisée par le fait que les branches des bouts courts (12, 12', 12'', 12''') font avec les branches longues (4) un angle d'environ 90° à environ - 15°.

3. Bobine selon les revendications 1 et 2, caractérisée par le fait que pour l'assemblage des segments (1), les appendices (2) présentent à l'extrémité de raccordement à la branche de U associée (4) un creux (5) auquel sont fixées les extrémités des appendices (2) du segment (1) suivant.

4. Bobine selon les revendications 1 et 2, caractérisée par le fait que les extrémités (10) des appendices (2) sont repliées radialement vers l'intérieur, qu'elles s'étendent parallèlement aux branches (4) du segment suivant, et que ces extrémités (10) sont fixées aux branches (4), par exemple par des soudures (11).

5. Bobine selon les revendications 1 à 4, caractérisée par le fait que les appendices (2', 2'') s'étendent dans des directions opposées.
